# EUROPÄISCHE PATENTANMELDUNG

(11) **EP 1 462 797 A2**
(43) Veröffentlichungstag der Anmeldung: **29.09.2004**
(21) Anmeldenummer: 04009476.5
(22) Anmeldetag: 20.05.1999
(51) Int. Cl.: G01N 27/407, C04B 41/85

(54) **Verfahren zur Herstellung keramischer, diffusionslimitierender Schichten**

(30) Priorität: 05.06.1998 DE 19825094
(62) Teilanmeldung aus: 99109898.9
(71) Anmelder: J. Dittrich Elektronic GmbH & Co.KG,, 76532 Baden-Baden (DE)
(72) Erfinder: Die Erfindernennung liegt noch nicht vor
(74) Vertreter: Schrooten, Rolf, Dipl.-Ing.

(57) **Zusammenfassung**

Die Erfindung betrifft ein Verfahren zur Herstellung keramischer, diffusionslimitierender Schichten unter Verwendung feindisperser, keramischer Pulver, wobei das oxidkeramische Pulver, das eine spezifische Oberfläche nach Brunauer-Emmett-Teller (BET) im Bereich von 5 bis 50 m²/g und eine mittlere Primärteilchengröße von 20 bis 450 nm aufweist, mit einem rekristallisierenden Glaspulver aus dem System SiO₂-Al₂O₃-BaO vermischt wird, um anschließend auf eine hochtemperaturstabile Unterlage aufgetragen und bei Temperaturen im Bereich zwischen 850 °C und 1000 °C ein gebrannt zu werden.

## Beschreibung

Die Erfindung betrifft ein Verfahren zur Herstellung keramischer, diffusionslimitierender Schichten unter Verwendung feindisperser, keramischer Pulver.

Aus DE 29 45 020 A1 ist beispielsweise eine poröse ZrO₂-Keramik bekannt, deren Porosität bzw. Gasdurchlässigkeit über den Zusatz von TiO₂ zu ZrO₂ geregelt wird. Die Porosität steigt mit steigendem TiO₂-Gehalt. Zur Feststellung der Porosität wird ein Preßling aus einer Pulvermischung aus ZrO₂ (vollstabilisiert) und TiO₂ hergestellt, der nach Sinterung bei 1470°C eine Gasdurchlässigkeit von etwa 10⁻⁵ bis 10⁻³ bar ml / sec cm² aufweist. Es wird weiterhin in DE 29 45 020 offenbart, daß ein poröser Formkörper, z.B. als Plättchen, auf eine Elektrode eines elektrochemischen Meßfühlers aufgebracht wird und somit als poröse Schutzschicht dient. Zur Befestigung eines derartigen Plättchens auf einem Meßfühler wird eine Glasur vorgeschlagen.

Eine poröse Keramikschicht als Diffusionsbarriere oder als Diffusionskanal beschreibt weiterhin DE 42 31 966 A1. Auch hier besteht die Schicht aus ZrO₂, wobei die Porosität der Diffusionsschicht durch den Zusatz von Porenbildnern, wie beispielsweise Thermalruß, Theobromin oder Indanthrenblau, erzeugt wird, die beim Sinterprozeß verbrennen, sich zersetzen oder verdampfen. Die Zugabemenge derartiger Porenbildner ist gemäß DE 42 31 966 relativ hoch, so daß eine Porosität von 10 bis 50 % mit einem mittleren Porendurchmesser zwischen 5 und 50 µm erzeugt wird. Das ZrO₂-Pulver und die Porenbildner werden mit organischen Bindem und Lösungsmitteln so zusammengebracht, daß hieraus eine keramische Grünfolie hergestellt werden kann, die in sogenannter Tape-Technologie weiterverarbeitet wird. Als weiterer Porenbildner wird in DE 43 43 315 A1 auch Glaskohle genannt, die hier ebenfalls mit einem Keramikpulver zu einem Tape oder zu einer Paste weiterverarbeitet wird. Je nach Korndurchmesser der Glaskohle werden gemäß DE 43 43 315 nach dem Sintern des Materials Porengrößen zwischen 1 und 150 µm erreicht.

Die Nachteile dieser nach dem Stand der Technik genannten Möglichkeiten der Herstellung poröser keramischer Schichten liegen darin, daß die Poren- bzw. Porenkanaldurchmesser relativ groß sind für die Anwendung als gasdurchlässige Schichten bei Gassensoren, wodurch die Gefahr einer Verstopfung durch Partikel aus dem Verbrennungsgasstrom mit der Folge einer geringen Lebensdauer derartiger Sensoren besteht. Für rohrförmige Sensoren ist überdies die in DE 42 31 966 und DE 43 43 315 offenbarte Tape-Technologie nicht besonders geeignet, da das übliche Auflaminieren mehr für planare und nicht für sphärische Oberflächen geeignet ist.

Es ist daher Aufgabe der Erfindung die oben beschriebenen Nachteile des Standes der Technik zu überwinden und dabei ein Verfahren anzugeben, das die Herstellung einer porösen keramischen Schicht mit einer Porosität im Nanometer-Bereich (etwa 70 nm bis 600 nm) erlaubt und das weiterhin sowohl für Schichten auf planaren als auch auf sphärischen Formkörpem geeignet ist.

Die vorstehende Aufgabe wird erfindungsgemäß dadurch gelöst, daß ein oxidkeramisches Pulver, das eine spezifische Oberfläche nach BET (Brunauer, Emmett und Teller) im Bereich von 5 bis 50 m²/g und eine mittlere Primärteilchengröße von 20 bis 450 nm aufweist mit einem rekristallisierenden Glaspulver aus dem System SiO₂-Al₂O₃-BaO vermischt wird, um anschließend auf eine hochtemperaturstabile Unterlage aufgetragen und bei Temperaturen im Bereich zwischen 850°C und 1000°C eingebrannt zu werden.

Der Zusatz des rekristallisierenden Glaspulvers wirkt dahingehend, daß sich bei Temperaturen zwischen 850°C und 1000°C keine dünnflüssige Schmelze bildet, sondem es zu einer Verklebung der oxidischen Pulverpartikel kommt, was ebenfalls zu nanoskaliger Porosität führt. Das keramische Pulver hat als charakteristische Pulverkennwerte eine BET-Oberfläche von 5 bis 50 m²/g und eine mittlere Primärteilchengröße von 20 bis 450 nm. Die Kombination eines oxidkeramischen Pulvers mit einem rekristallisierenden Glaspulver führt zu einer porösen Schicht, die auch für Betriebstemperatur bis zu 800°C geeignet ist. In der eingebrannten Schicht bildet sich eine deutliche Trennung von Glasphase und Pulverphase heraus, die durch die Differenz der spezifischen Dichten des rekristallisierenden Glases mit etwa 3,1 g/cm³ und dem oxidischen Pulver, beispielsweise aus ZrO₂, mit eine Dichte von etwa 6,0 g/cm³ bewirkt wird. Die Trennung der Materialphase erfolgt in der Art, daß bei Anordnung der erfindungsgemäßen Schicht als Abdeckschicht auf einer Elektrode sich die oxidischen Pulverpartikel sich in Richtung der Elektrode anreichern und eine Erhöhung des Glasphasenanteils in Richtung der äußeren Umgebung bzw. des Gasraumes zu beobachten ist. Sensoren mit derartigen keramischen Abdeckschichten zeigen geringe oder keine Temperaturabhängigkeit des Sensorsignals.

Vorteilhafte Ausgestaltungen und Weiterbildungen des erfindungsgemäßen Verfahrens sind in den Unteransprüchen aufgeführt, wonach für das feindisperse Pulver ein teil- oder vollstabilisiertes ZrO₂-Pulver oder ein Al₂O₃ - Pulver oder daraus hergestellte Mischungen, die bei höherer Temperatur Sauerstoffionenleitfähigkeit zeigen, eingesetzt werden. Die Vollstabilisierung des ZrO₂-Pulvers kann beispielsweise durch die Zugabe von 8 Mol % Y₂O₃ erfolgen.

Die chemische Zusammensetzung des rekristallisierenden Glaspulvers liegt vorzugsweise im Bereich von SiO₂, 35 - 51 Gewichts-%, Al₂O₃ 25 - 38 Gewichts-% und BaO 10 - 39 Gewichts-%, wobei weitere geringfügige Zusätze von Erdalkalioxiden wie Cao oder MgO vorteilhaft sein können.

Wird das feindisperse, oxidkeramische Pulver mit einem rekristallisierenden Glaspulver vermischt so liegen die Anteile des unbehandelten
Pulvers gegenüber dem rekristallisierenden Glaspulver zwischen 10 Gew % bis 50 Gew %.

Vorteilhafterweise wird die Pulvermischung mit Hilfe an Anpastmitteln, z.B. eine Ethylzellulose-Lösung, zu einer Paste verarbeitet, die im Siebdruckverfahren auf eine Unterlage aufgetragen wird. Als Unterlage kann ein planares oder sphärisches Substrat, beispielsweise aus vollstabilisiertem ZrO₂ verwendet werden. Diese Unterlage kann auf beiden Seiten mit einer funktionellen Schicht in Form kongruent liegender Elektroden beschichtet sein. Dabei kann weiterhin eine der Elektroden vollständig von einer erfindungsgemäßen diffusionslimitierenden Schicht abgedeckt sein.
Im Falle der keramischen Schicht mit der Eigenschaft diffusionslimitierend und sauerstoff- ionenleitend wird auf einer keramischen Unterlage (planar oder sphärisch) einseitig eine Elektrodenschicht aufgebracht. Auf dieser Elektrode folgt die diffusionslimitierende und sauerstoffionenleitende Schicht, die wiederum von einer zweiten Elektrodenschicht bedeckt ist.

Durch die Sinterung der aufgetragenen Schicht im Temperaturbereich zwischen 850 °C und 1000°C entsteht eine poröse keramische Schicht mit einer Schichtdicke im Bereich etwa zwischen 15 und 100 µm. Um Aufschluß über die Porosität der Schicht bzw. ihre Wirksamkeit in Bezug auf ihre diffusionslimitierende Eigenschaft zu erlangen, kann beispielsweise eine rasterelektronenmikroskopische Aufnahme und/oder ein sogenannter Helium-Leckratentest herangezogen werden. Bei dem Leckratetest wird eine definiertes Flächensegment der porösen Schicht auf einem gasdichten Trägermaterial einer Heliumatmosphäre ausgesetzt und der Druckverlust, der sich aus dem durch die Schicht hindurchdiffundierenden Helium ergibt, gemessen. Die Durchlässigkeit gegenüber Helium ist im Vergleich zu der gegenüber Sauerstoff aufgrund der unterschiedlichen Molekülgröße wesentlich höher, so daß sich mit dem geschilderten Leckratetest für die Praxis nur eine Richtgröße in Bezug auf die diffusionslimitierende Eigenschaft der Schicht in Bezug auf Sauerstoff ergibt. Zusammen mit einer rasterelektronenmikroskopischen Aufnahme kann aber durchaus eine Aussage über die Qualität der nach dem erfindungsgemäßen Verfahren hergestellten Schicht gemacht werden.

Im folgenden wird die Erfindung anhand eines Ausführungsbeispieles erläutert.

### Beispiel

50 Teile eines 8YSZ-Pulvers mit mit einer BET Oberfläche von 5,5 m²/g und einer mittleren Primärteilchengröße von 430 nm werden mit 50 Teile eines rekristallisierenden Glaspulvers der Zusammensetzung 35,0 Gew % SiO₂, 26,3 Gew % Al₂O₃, 29,4 Gew % BaO, 5,2 Gew % CaO, 4,1 Gew % MgO vermischt, wobei das Glaspulver eine BET Oberfläche von 3,5 m²/g aufweist. Aus dieser Mischung wird nach den Angaben gemäß Beispiel 1 eine Paste hergestellt, die im Siebdruckverfahren auf ein Substrat bzw. auf eine funktionelle Schicht, wie beispielsweise eine Elektrode, aufgetragen wird. Der Einbrand erfolgt hier für 0,5 Stunden bei 1000°C. Die Schicht gemäß Beispiel hat aufgrund des genngen Anteils des YSZ-Pulvers ausschließlich diffusionslimitierende Eigenschaft.

## Patentansprüche

1. Verfahren zur Herstellung keramischer, diffusionslimitierender Schichten unter Verwendung feindisperser, keramischer Pulver, **dadurch gekennzeichnet, daß** das oxidkeramische Pulver, das eine spezifische Oberfläche nach Brunauer-Emmett-Teller (BET) im Bereich von 5 bis 50 m²/g und eine mittlere Primärteilchengröße von 20 bis 450 nm aufweist, mit einem rekristallisierenden Glaspulver aus dem System SiO₂-Al₂O₃-BaO vermischt wird, um anschließend auf eine hochtemperaturstabile Unterlage aufgetragen und bei Temperaturen im Bereich zwischen 850 °C und 1000°C eingebrannt zu werden.

2. Verfahren zur Herstellung keramischer, diffusionslimitierender Schichten nach Anspruch 1,
**dadurch gekennzeichnet, daß** das rekristallisierende Glaspulver einen SiO₂-Gehalt im Bereich von 35 Gew % bis 51 Gew % , einen Al₂O₃-Gehalt im Bereich von 25 Gew % bis 38 Gew % und einen BaO-Gehalt im Bereich von 10 Gew % bis 39 Gew % aufweist.

3. Verfahren zur Herstellung keramischer, diffusionslimitierender Schichten nach Anspruch 1,
**dadurch gekennzeichnet, daß** die Pulvermischung aus unbehandeltem, oxidkeramischen Pulver und rekristallisierenden Glaskeramikpulver mit Hilfe von Anpastmitteln zu einer Paste verarbeitet wird, die im Siebdruckverfahren auf eine Unterlage aufgetragen wird.

4. Verfahren zur Herstellung keramischer, diffusionslimitierender Schichten nach Anspruch 1 oder 3, **dadurch gekennzeichnet, daß** die Unterlage, auf die die Pulvermischung aus oxidkeramischen Pulver und rekristallisierenden Glaspulver oder die die jeweilige Pulvermischung enthaltende Paste aufgetragen wird, ein hochtemperaturstabiles Substrat oder eine funktionelle Schicht auf einem hochtemperaturstabilen Substrat ist.

5. Verfahren zur Herstellung keramischer, diffusionslimitierender Schichten nach Anspruch 4,
**dadurch gekennzeichnet, daß** das hochtemperaturstabile Substrat ein Festelektrolyt mit Sauerstoffionenleitfähigkeit ist.

6. Verwendung einer keramischen, diffusionslimitierenden Schicht nach einem der vorhergehenden Ansprüche als Diffusionsschicht und /oder sauerstoffionenleitende Schicht bei einer Sauerstoffsonde zur Bestimmung von Sauerstoff in Gasen.
